# FASCICULE DE BREVET EUROPEEN

(11) **EP 0 859 918 B1**
(45) Date de publication et mention de la délivrance du brevet: **27.11.2002**
(21) Numéro de dépôt: 97940181.7
(22) Date de dépôt: 05.09.1997
(51) Int. Cl.: F16D 13/58, F16D 13/50

(54) **EMBRAYAGE A FRICTION A FAIBLE EFFORT DE DEBRAYAGE**
REIBKUPPLUNG MIT VERRINGERTEM LÖSEKRAFTAUFWAND
FRICTION CLUTCH WITH LOW DISENGAGING FORCE

(30) Priorité: 06.09.1996 FR 9611009; 07.04.1997 FR 9704213; 07.04.1997 FR 9704214
(43) Date de publication de la demande: 26.08.1998
(73) Titulaire: VALEO, 75017 Paris (FR)
(72) Inventeur: BACHER, Michel, F-95580 Andilly (FR); THIRION DE BRIEL, Jacques, F-92700 Colombes (FR); GRATON, Michel, F-75020 Paris (FR); DALBIEZ, André, F-95100 Argenteuil (FR); BLARD, Michel, F-92130 Issy-les-Moulineaux (FR); MINEREAU, Hugues, F-93240 Stains (FR)
(74) Mandataire: CABINET BONNET-THIRION
(86) Numéro de dépôt international: FR9701564
(87) Numéro de publication internationale: WO98010201

(56) Documents cités:
- EP-A- 0 537 088
- EP-A- 0 718 517
- EP-A- 0 779 446
- WO-A-97/19275
- DE-A- 4 311 286
- DE-A- 4 326 501
- FR-A- 2 176 388
- FR-A- 2 718 205
- FR-A- 2 739 159
- GB-A- 943 039

## Description

La présente invention concerne les embrayages à friction à faible effort de débrayage, notamment pour véhicules automobiles.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené.

Pour désengager, ou débrayer, l'embrayage , il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené car les garnitures de friction ne sont plus serrées entre les plateaux de pression et de réaction solidaires en rotation du couvercle.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression au couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois monté dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme qui représente la force exercée en fonction du déplacement, par exemple ramenée au niveau de l'extrémité interne de doigts du diaphragme, est déterminée par les dimensions de sa rondelle Belleville, notamment par le rapport entre la hauteur du tronc de cône de la rondelle Belleville à l'état libre et l'épaisseur du diaphragme.

Cette courbe caractéristique passe par un maximum.

Ainsi, la force à exercer sur l'extrémité interne des doigts du diaphragme augmente jusqu'à un maximum, diminue graduellement jusqu'à un minimum, puis augmente à nouveau. La différence entre le maximum et le minimum peut être importante. Pour plus de précisions sur cette courbe caractéristique, on se reportera par exemple au document FR-A-1 392 569.

Dans le document FR-A-1 392 569, on a prévu un dispositif élastique de progressivité pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression lors du débrayage.

Les courbes de charge du dispositif de progressivité, lorsqu'il est monté au sein de la friction, et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue, notamment à cause des phénomènes d'inscrustation des garnitures de friction, très rapidement avec la vie de l'embrayage, ceci annulant d'autant plus l'assistance au débrayage que le niveau d'assistance demandé est élevé. Pour éviter le vieillissement de la courbe du dispositif d'assistance, il est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance.

Ainsi, dans le document FR-A-2 718 205, on a proposé un embrayage à friction, notamment pour véhicules automobiles, comportant une friction d'embrayage et un mécanisme d'embrayage ayant un couvercle avec un fond d'orientation transversale et des moyens de fixation pour fixation du mécanisme d'embrayage sur un volant d'entraînement en rotation, un plateau de pression présentant frontalement une face de friction pour coopération avec la friction d'embrayage, des languettes élastiques pour liaison en rotation, avec mobilité axiale, du plateau de pression avec le couvercle, et, interposés entre le plateau de pression et le fond du couvercle, d'une part, des moyens élastiques embrayeurs à action axiale sollicitant axialement le plateau de pression en direction opposée du fond du couvercle et, d'autre part, un dispositif débrayeur pour contrecarrer à volonté l'action desdits moyens élastiques embrayeurs et déplacer le plateau de pression en direction du fond du couvercle sur une distance dite levée de plateau, le mécanisme d'embrayage étant équipé d'un dispositif de rattrapage d'usure d'au moins des garnitures de la friction d'embrayage et de moyens élastiques d'assistance pour assister l'effort de débrayage, des moyens élastiques de progressivité étant montés au sein de la friction d'embrayage et n'intervenant axialement que sur une course du plateau de pression, les moyens élastiques d'assistance étant montés à l'extérieur de la friction d'embrayage.

La présente invention a pour objet de créer, de manière simple et économique, un embrayage à friction du type ci-dessus équipé d'un dispositif de rattrapage d'usure et d'un dispositif de progressivité monté au sein de la friction, à faible effort de débrayage, faisant appel à des ressorts agissant en série sans diminuer notablement, tout au long de la durée de vie de l'embrayage, la force de serrage des garnitures de friction à l'état embrayage engagé.

Ainsi, selon l'invention, un embrayage à friction du type ci-dessus est caractérisé par le fait que la caractéristique charge-écrasement combinant les caractéristiques charge-écrasement des moyens élastiques d'assistance et de progressivité suit globalement la caractéristique charge-écrasement des moyens élastiques embrayeurs à action axiale.

C'est la différence entre ces deux caractéristiques qui représente l'évolution de l'effort à fournir pour débrayer l'embrayage ; celui-ci peut être faible, ces caractéristiques pouvant être proches l'une de l'autre ; il peut être constant si celles-ci sont parallèles, l'une suivant l'autre à une constante près ; il peut être légèrement croissant lorsqu'elles ne sont pas rigoureusement parallèles.

Le dispositif de progressivité monté au sein de la friction permet à celle-ci, plus exactement aux garnitures portées par celle-ci, de s'adapter géométriquement aux faces de friction du plateau de réaction et du plateau de pression qui, notamment, sous l'effet des élévations de température dues au frottement, se déforment, la déformation la plus courante étant une mise en cône ; grâce au dispositif de progressivité, les garnitures de friction suivent en s'adaptant à ces déformations, en sorte que l'on réduit les usures desdites garnitures. Il est toutefois important de noter que ces déformations n'ont pas axialement une très grande ampleur, et un dispositif de progressivité tolérant une adaptation des garnitures de friction de 3 à 4 dixièmes de millimètre, mesurée axialement, est suffisant ; ainsi, pour une levée de plateau de pression de l'ordre de 1,2 millimètre, on voit que le dispositif de progressivité n'intervient au plus que lors du tiers de cette levée. Bien entendu, cela dépend des applications.

L'invention a pour but également de mettre à profit cette constatation : avantageusement, les moyens élastiques de progressivité n'interviennent axialement que sur une course du plateau de pression au plus égale au tiers de la levée de plateau.

Grâce à cette disposition, la contribution des moyens de progressivité à l'effort d'assistance risque moins de perturber la valeur de celui-ci en utilisation.

Avantageusement, les moyens élastiques embrayeurs et les moyens élastiques d'assistance sont constitués chacun d'une rondelle Belleville, les deux rondelles Belleville étant montées en série et placées axialement entre le plateau de pression et le fond du couvercle.

De préférence, la première rondelle Belleville est dite rondelle Belleville négative, sa charge fournie diminuant lorsque la hauteur de son tronc de cône diminue, et la seconde rondelle Belleville est dite rondelle Belleville positive, sa charge fournie augmentant lorsque la hauteur de son tronc de cône diminue.

Avantageusement, le plateau de pression présente dorsalement une butée située radialement en-dessous des zones d'appui pour limiter l'inclinaison de la première rondelle Belleville et éviter son retournement.

De préférence, des moyens de transmission d'effort sont intercalés entre les périphéries internes des première et seconde rondelles Belleville.

Avantageusement, les rondelles Belleville sont maintenues en contact avec les moyens de transmission d'effort par une pince élastique, éventuellement fractionnée, venant en prise avec les faces externes des rondelles Belleville.

Selon une forme de réalisation, le dispositif débrayeur est de forme annulaire et les deux rondelles Belleville sont montées en série entre le plateau de pression et un appui de manoeuvre porté par le dispositif débrayeur qui est monté à sa périphérie externe de manière pivotante sur un appui primaire porté par le fond du couvercle radialement au-dessus de l'appui de manoeuvre, lui-même implanté radialement au-dessus d'un appui secondaire porté par le fond du couvercle ; le dispositif de rattrapage d'usure comportant des moyens à rampes présentant des rampes disposées circonférentiellement et des zones d'appui, la première rondelle Belleville est en contact à sa périphérie externe avec les zones d'appui, tandis que la seconde rondelle Belleville s'appuie à sa périphérie externe sur l'appui de manoeuvre, lesdites rondelles étant inclinées en sens inverse ; le dispositif débrayeur comporte une partie périphérique de forme annulaire prolongée par une partie principale fragmentée en doigts radiaux par des fentes ; l'appui de manoeuvre est formé par emboutissage et se raccorde à la périphérie interne de la partie périphérique annulaire du dispositif débrayeur par un embouti dirigé axialement en sens inverse de l'appui de manoeuvre ; la partie périphérique du dispositif débrayeur est décalée axialement par rapport à sa partie principale ; l'appui primaire est décalé axialernent par rapport à l'appui secondaire.

Avantageusement, les moyens de transmission d'effort consistent en un jonc.

Selon une autre forme de réalisation, le dispositif de rattrapage d'usure comportant des moyens à rampes présentant des rampes disposées circonférentiellement et des zones d'appui, la première rondelle Belleville est en contact avec les zones d'appui, tandis que la seconde rondelle Belleville s'appuie sur le couvercle ; de préférence, la première rondelle est en contact par sa périphérie externe avec les zones d'appui tandis que la seconde rondelle s'appuie par sa périphérie externe sur le couvercle ; les moyens de transmission d'effort sont portés par le dispositif débrayeur.

En variante, la première rondelle est en contact par sa partie médiane avec les zones d'appui tandis que la seconde rondelle s'appuie par sa périphérie interne sur le couvercle.

Selon une autre variante, la première rondelle est en contact par sa périphérie interne avec les zones d'appui tandis que la seconde rondelle s'appuie par sa périphérie interne sur le couvercle.

Avantageusement, le fond du couvercle porte une butée pour limiter l'inclinaison de la seconde rondelle Belleville.

De préférence, la seconde rondelle élastique est la partie périphérique externe d'un diaphragme prolongée vers l'intérieur par une partie centrale fragmentée en doigts radiaux par des fentes.

Selon une forme d'exécution, le dispositif débrayeur comprend un plateau transversal portant à sa périphérie externe les moyens de transmission d'effort et relié par sa périphérie interne à un manchon monté coulissant axialement.

Selon une autre forme d'exécution, le dispositif débrayeur comprend un disque annulaire portant dans sa partie radialement médiane les moyens de transmission d'effort et présentant, à sa périphérie externe, des pattes traversant des ouvertures ménagées dans une jupe périphérique cylindrique que présente le couvercle, les pattes du disque annulaire étant adaptées à prendre appui sur un bord de ces ouvertures lorsque la partie voisine de sa périphérie interne du disque annulaire est déplacée axialement.

Selon encore une autre forme d'exécution, le dispositif débrayeur comprend un disque comportant une partie annulaire prolongée vers l'axe par une partie centrale fragmentée en doigts radiaux par des fentes, les moyens de transmission d'effort étant placés à la périphérie externe de ladite partie annulaire elle-même montée à articulation à la périphérie interne du fond du couvercle.

Avantageusement, le dispositif de rattrapage d'usure est actionné par les moyens élastiques embrayeurs.

Selon une autre variante, le dispositif de rattrapage d'usure est actionné par les moyens de transmission d'effort.

La description qui va suivre illustre l'invention en regard des dessins annexés dans lesquels :
- la figure 1 est une demi-vue en coupe axiale d'un embrayage selon l'invention en position embrayage engagé ;
- les figures 2 et 3 sont des vues analogues à la figure 1 montrant une variante d'embrayage selon l'invention ;
- la figure 4 est une vue montrant une autre variante d'embrayage selon l'invention ;
- la figure 5 est une vue montrant encore une autre variante d'embrayage selon l'invention.

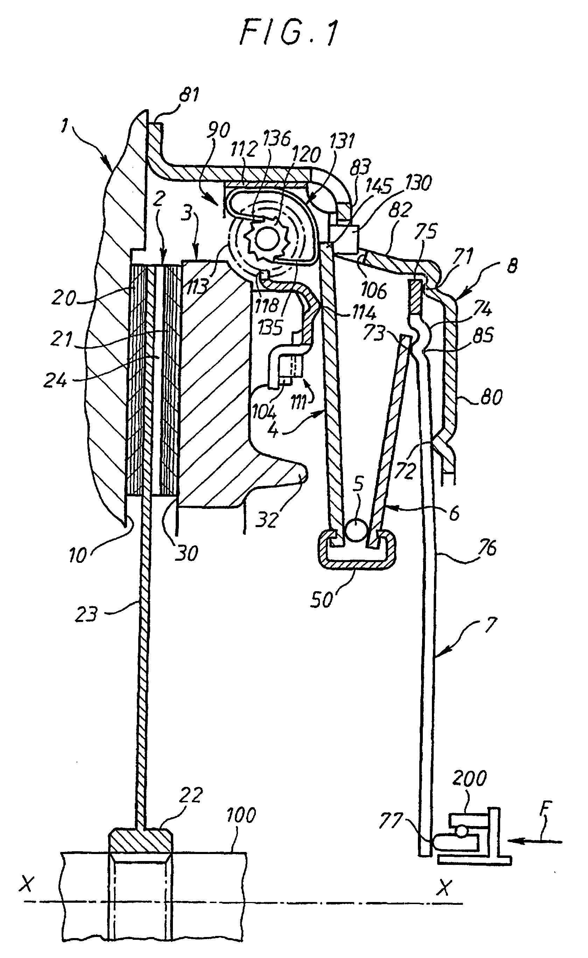

L'embrayage du type poussé représenté sur la figure 1 est du type décrit dans le document FR-A-2 753 756 dont la description est à considérer comme faisant partie de celle-ci. Globalement, un tel embrayage comporte un ensemble de pièces de forme annulaire, à savoir successivement axialement un volant 1 d'entraînement en rotation, pour fixation de l'embrayage à un premier arbre, tel qu'un arbre menant, une friction d'embrayage 2 présentant à sa périphérie externe des garnitures de friction 20, 21 et à sa périphérie interne un moyeu 22 pour liaison en rotation de l'embrayage avec un second arbre, tel qu'un arbre mené, un plateau de pression 3, une première rondelle Belleville 4, un jonc d'appui 5, une seconde rondelle Belleville 6 inclinée en sens inverse par rapport à la première rondelle Belleville 4, un dispositif débrayeur 7 de forme annulaire, un couvercle 8 de forme creuse présentant un fond 80 globalement d'orientation transversale troué centralement et à sa périphérie externe des moyens de fixation 81 pour fixation du couvercle 8 au volant 1 formant plateau de réaction.

Le volant 1 présente dorsalement une face de friction 10 et est représenté ici partiellement, sachant que de manière connue il présente centralement des trous pour sa fixation à l'aide de vis à l'arbre menant. Ici, le volant 1 est d'un seul tenant en étant en matière moulable tout comme le plateau de pression 3 présentant frontalement une face de friction 30 en regard de la face de friction 10 du volant 1. Le volant 1 et le plateau de pression sont ici en fonte ou toute autre matière adaptée aux frottements à sec.

La friction d'embrayage 2 présente un disque de support 23 pour porter les garnitures de friction 20,21 éventuellement fractionnées. Ces garnitures 20,21 s'étendent de part et d'autre du disque de support 23 en étant fixées à celui-ci par exemple par rivetage. Ici les garnitures 20,21 sont fixées par collage ou brasage au disque de support 23 métallique.

Des moyens élastiques de progressivité 24 à action axiale sont interposés entre les deux garnitures 20,21 pour serrage progressif de celles-ci entre le volant 1 et le plateau de pression 3. Ces moyens peuvent avoir toute forme appropriée. Ici ces moyens 24 sont réalisés en conformant le disque de support 23. Ce disque, à titre non limitatif, peut présenter une partie centrale pour sa liaison de manière élastique ou non au moyeu 22 et une partie périphérique fragmentée en pales radiales par exemple du type tripode. Chaque pale présente alors une zone centrale de portée destinée à la fixation de l'une des garnitures de friction 20,21 et deux zones périphériques externes de portée destinées à coopérer avec l'autre des garnitures de friction 21,20.

Les zones de portée sont décalées axialement par rapport à la partie centrale du disque 23, la zone centrale de portée, de grande étendue, étant reliée à ladite partie centrale par un pli tangentiel, tandis que les zones de portées périphériques sont reliées à ladite zone centrale de portée par des plis obliques. Pour plus de précisions, on se reportera au document US-A-5,452,783 montrant également un mode de réalisation avec des garnitures de friction fractionnées en plots. Ainsi, on minimise les phénomènes d'incrustation des garnitures 20, 21 dans les pales. Ainsi, les moyens élastiques de progressivité sont plus stables dans le temps.

Comme mentionné ci-dessus, le disque 23 peut être accouplé de manière élastique au moyeu 22. En variante, le disque 23 est accouplé de manière rigide au moyeu 22, le volant 1 étant alors divisé pour présenter deux masses accouplées de manière élastique entre elles par des ressorts à action circonférentielle ou radiale.

En variante, le volant 1 peut être en deux parties et comporter un flasque de support fixé à sa périphérie interne à l'arbre menant et à sa périphérie externe à un plateau de réaction présentant la face de friction 10. Le couvercle 8 peut être alors assemblé au volant 1 en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation 81 précités du couvercle 8, peut être fixé par sertissage, rabattement ou soudage au flasque ou au plateau de réaction, comme décrit par exemple dans le document FR-A-2 741 917.

Ici le couvercle 8 a une forme classique et les moyens de fixation 81 consistent en un rebord radial du couvercle 8, dirigé radialement en direction opposée à l'axe de symétrie axial de l'embrayage, ledit rebord 81 étant doté de trous non visibles pour montage d'organes de fixation, tels que des vis ou en variante des rivets, du rebord 81 au volant 1.

S'agissant d'une application pour véhicule automobile, l'arbre menant est ici l'arbre moteur du véhicule sur le vilebrequin duquel se fixe le volant 1, tandis que l'arbre mené consiste en l'arbre d'entrée de la boîte de vitesses représenté partiellement en 100 à la figure 1.

Bien entendu, il est possible d'inverser les structures, le premier arbre pouvant être un arbre mené et le deuxième arbre un arbre menant.

Le plateau de pression 3 est lié en rotation avec le couvercle 8 de forme creuse par des languettes élastiques non visibles sur la figure permettant au plateau de pression 3 de se déplacer axialement par rapport au couvercle 8. Le plateau de pression 3 est donc solidaire en rotation du couvercle 8 et du volant 1, tout en étant mobile axialement par rapport à ceux-ci.

Ici, la jupe cylindrique externe 82 du couvercle 8, reliant le fond 80 au rebord radial de fixation 81, est trouée localement pour passage de pattes, que présente en saillie radiale le plateau de pression 3. Les languettes élastiques tangentielles sont fixées à l'une de leurs extrémités aux pattes et à leur autre extrémité à une plage radiale 83 du couvercle. Ces languettes élastiques sont réparties régulièrement circonférentiellement, de manière connue ; leur nombre, ainsi que celui des pattes, dépend des applications, sachant que, pour les véhicules de tourisme, on fait généralement appel à trois groupes de languettes élastiques. En variante, les languettes peuvent être inclinées ou d'orientation radiale. Dans tous les cas, elles exercent une force de rappel d'orientation axiale.

La fixation de celles-ci sur les plages 83 et les pattes est réalisée à l'aide d'organes de fixation, usuellement des rivets, en variante des vis ou des boulons.

La première rondelle Belleville 4, adjacente au plateau de pression 3, s'appuie à sa périphérie externe sur des zones d'appui 114 décrites ci-dessous.

Cette rondelle 4 est inclinée, en direction du couvercle 8, sa concavité étant dirigée vers le plateau de pression 3.

La deuxième rondelle Belleville 6, adjacente au dispositif débrayeur, s'appuie à sa périphérie externe sur le dispositif débrayeur 7 qui, à cet effet, présente un appui annulaire 73. La deuxième rondelle Belleville 6 est inclinée en direction du plateau de pression 3, en sens inverse de la première rondelle 4, sa concavité étant dirigée vers le fond 80 du couvercle 8.

Les deux rondelles Belleville 4 et 6 ont ainsi en coupe une forme en V en étant en contact à leur périphérie interne avec le jonc annulaire 5 de transmission d'effort intercalé entre celles-ci.

Plus précisément, dans les conditions décrites ci-après, l'une des rondelles Belleville assure le serrage de l'embrayage et est désignée ci-dessous par rondelle de serrage ; l'autre rondelle Belleville assure une assistance au débrayage et est désignée ci-dessous par rondelle d'assistance.

La rondelle de serrage, à la manière de la partie rondelle Belleville d'un diaphragme, est telle que la charge qu'elle procure croît avec la hauteur du tronc de cône qu'elle représente ; la rondelle d'assistance est telle que la charge qu'elle procure décroît avec la hauteur de son tronc de cône ; les deux rondelles travaillant dans la zone de leur courbe caractéristique charge-écrasement pratiquement linéaire, on voit qu'en choisissant des rondelles dont les courbes sont, dans ces zones, pratiquement parallèles, l'effort de débrayage, qui à chaque position du dispositif débrayeur est égal, ou proportionnel, à la différence des charges des rondelles, est faible et pratiquement constant ; en variante, si la raideur de la rondelle de serrage est plus grande que celle de la rondelle d'assistance, on peut obtenir un effort de débrayage faible mais croissant légèrement avec la course de débrayage. Ces courbes caractéristiques tiennent ici compte de l'effort dû aux moyens élastiques de progressivité 24 de la friction 2, et théoriquement de l'effort dû aux languettes élastiques mais celui-ci est négligeable, ces efforts, comme on le sait, agissant dans le sens du débrayage et participant à l'assistance au débrayage.

Ainsi, la rondelle positive a une zone d'utilisation qui, en considérant la courbe caractéristique d'un diaphragme, se situe de l'origine à globalement le maximum de ladite courbe, tandis que la zone d'utilisation de la rondelle Bellevile négative se situe au-delà dudit maximum.

L'appui 73 du dispositif débrayeur 7 constitue un appui de manoeuvre de manière décrite ci-après.

Ici, le dispositif débrayeur 7 est métallique et l'appui 73 est réalisé par emboutissage en étant de forme arrondie.

Ces rondelles Belleville 4,6 sont bien entendu dimensionnées pour qu'un équilibre soit réalisé en combinaison avec les moyens élastiques de progressivité 24 lorsque l'embrayage est en position embrayée, position représentée sur la figure 1.

Avantageusement, les rondelles 4,6 sont creusées localement, ici par formage, pour recevoir le jonc 5. La face externe de ces rondelles 4,6 est rainurée pour maintien d'une pince 50 en forme de U, dont les extrémités libres des branches sont d'orientation axiale. La pince 50 s'étend par son fond radialement en dessous des rondelles 4,6.

La pince 50, ici de forme annulaire, est élastique et serre élastiquement les rondelles au contact du jonc 5 en étant en contact par ses branches avec la face externe desdites rondelles. Cette pince 50 peut en Variante être fractionnée en clips. En fonction de l'inclinaison des rondelles 4,6, la pince s'ouvre ou se referme.

Le dispositif débrayeur 7, ici métallique, est propre à s'appuyer localement à sa périphérie externe sur un appui primaire de forme annulaire 71 formé par emboutissage à la périphérie externe du fond 80 du couvercle 8, ici en tôle emboutie. Ce couvercle 8 présente au niveau de la périphérie interne de son fond 80 troué centralement un appui secondaire 72 de forme annulaire formé par emboutissage.

Le dispositif débrayeur 7 est propre à venir localement en contact sur cet appui primaire 71 formant appui de pivotement . L'appui primaire 71 est décalé axialement en direction du rebord 81 et du plateau de pression 3 par rapport à l'appui secondaire 72.

Ainsi en position d'embrayage engagé, le dispositif débrayeur 7 s'appuie sur l'appui secondaire 72. L'appui de manoeuvre 73 du dispositif débrayeur est implanté radialement entre les appuis primaire 71 et secondaire 72. Bien entendu, les appuis 71 à 73 peuvent être remplacés par des joncs annulaires, le couvercle 8 et le dispositif débrayeur 7 étant alors creusés à cet effet.

Dans tous les cas, les appuis 71 à 73 sont portés respectivement par le fond 80 du couvercle 8 et le dispositif débrayeur 7.

On notera que la périphérique externe 75 du dispositif débrayeur 7 est décalée axialement par rapport à la partie principale 76 dudit dispositif débrayeur 7 afin, en combinaison avec le décalage de l'appui primaire 71, de réduire l'encombrement axial. Ce décalage de la partie périphérique 75 est réalisé en emboutissant localement en 74 le dispositif débrayeur 7 et ce en direction du fond 80 du couvercle. Cet embouti 74 raccorde la partie périphérique 75 à l'appui de manoeuvre 73 en sorte que la partie périphérique 75 se raccorde à la partie principale 76 par une portion annulaire globalement en forme de S inversé. On notera que l'embouti 74 permet également de retenir radialement et de centrer la deuxième rondelle 6. L'embouti 74 est dirigé axialement en sens inverse par rapport à l'appui de manoeuvre 73 et permet de raidir la zone s'étendant entre l'appui de manoeuvre 73 et la partie périphérique 75 du dispositif débrayeur 7.

Tout ceci est possible car le dispositif débrayeur 7 n'exerce pas de manière notable d'action élastique axialement, sa charge étant faible.

Pour assurer une parfaite constance de l'effort de serrage, le mécanisme d'embrayage est équipé d'un dispositif de rattrapage d'usure tel que le dispositif 90 ; le dispositif 90 a été décrit en détails dans la demande de brevet français déposé le 17 Septembre 1996 sous le numéro 96 11 297 à laquelle il conviendra de se reporter pour plus d'informations, la description correspondante devant être considérée comme faisant partie de la présente demande ; on rappellera simplement sa constitution.

Le dispositif de rattrapage d'usure 90 comprend des moyens à rampes 111 disposées circonférentiellement constitués d'un anneau en tôle découpée et emboutie de façon à présenter des rampes disposées circonférentiellement ; ledit anneau présente également des zones d'appui 114 constituées par l'arête supérieure arrondie d'emboutis en arcs de cercle centrés sur l'axe de l'embrayage et placés ici radialement à l'extérieur par rapport aux rampes. Le plateau de pression 3 présente, ici venus de moulage, sur sa face tournée vers le fond du couvercle 8, des plots 104 répartis circonférentiellement à une distance l'un de l'autre qui correspond à celle qui sépare circonférentiellement deux rampes successives, les plots 104 étant destinés à coopérer chacun avec une rampe.

Les moyens à rampes 111 sont placés axialement entre la première rondelle 4 et le plateau de pression 3 en sorte que les plots 104 reçoivent les rampes et la première rondelle 4 coopère avec les zones d'appui 114 qui constituent ainsi les moyens d'appui par l'intermédiaire desquels les rondelles 4 et 6 agissent sur le plateau de pression 3.

L'une des zones d'appui 114 des moyens à rampes 111 est prolongée à sa périphérie externe par un rebord parallèle à l'axe de l'embrayage se terminant selon un retour transversal, c'est-à-dire s'étendant dans un plan perpendiculaire à l'axe de l'embrayage, muni à sa périphérie d'une denture 118.

Le dispositif de rattrapage d'usure 90 comprend par ailleurs une roue à rochet 120 à dents inclinées solidaire d'un axe qui porte également une vis sans fin 113 ; le filet et le pas de la vis sans fin 113 sont adaptés à la denture 118 des moyens à rampes 111.

L'axe de la roue à rochet 120 est porté à rotation par un support 112, en tôle découpée et pliée, en forme de U ayant une âme et deux ailes destinées à supporter l'axe.

Le support 112 se prolonge extérieurement selon des bras en forme de L se terminant chacun par une extrémité 130 en forme de C par lesquelles le support 112 est fixé au couvercle par sertissage sur les bords d'une ouverture transversale 106 percée dans la paroi transversale du couvercle 2.

Le support 112 est adapté à recevoir un organe élastique 131 en forme générale de crosse dont chaque extrémité est munie d'un retour vers l'intérieur ; plus précisément, la partie de plus grande longueur de la crosse porte en bout une languette de commande 135 ; la partie de plus petite longueur de la crosse a un retour 136, dit cliquet anti-retour, qui s'étend globalement parallèlement à la languette de commande 135 en étant à distance de celle-ci en sorte que, lorsque l'organe élastique 131 et la roue à rochet 120 sont montés dans le support 112, le cliquet anti-retour 136 et la languette de commande 135 coopèrent chacun avec un pied de dent, les deux dents concernées étant ici pratiquement diamétralement opposées.

Un ressort hélicoïdal de compression est placé entre la roue à rochet 120 et un bras du support 112, en étant enroulé autour de l'axe ; la vis sans fin 13 et la roue à rochet 20 sont taillées dans une même pièce.

Le ressort hélicoïdal constitue le moyen élastique de rattrapage ; la roue à rochet 120 est au droit du cliquet anti-retour 136 qui, par coopération avec les dents 121 inclinées de la roue à rochet 120, empêche de tourner la roue à rochet 120, ainsi que la vis sans fin 113, dans le sens contraire à celui des aiguilles d'une montre, par rapport à la figure.

Le support 112, portant la roue à rochet 120, la vis sans fin 113 et le ressort hélicoïdal, étant solidaire du couvercle 8, la première rondelle 4 se déplace par rapport à lui lors des opérations de débrayage et de ré-embrayage ; la première rondelle 4 porte à sa périphérie un appendice radial dit actionneur 145 s'étendant radialement à l'extérieur pour coopérer avec l'organe élastique 131 ; on comprendra que, grâce à cette disposition, lors du basculement de la première rondelle 4 lors des opérations de débrayage et de ré-embrayage, l'actionneur 145 déplace de la droite vers la gauche, par rapport à la figure, la languette de commande 135 qui, par coopération avec les dents 121 de la roue à rochet 120, est amenée à faire tourner la roue à rochet 120 dans le sens horaire ; lorsque l'actionneur 145, au retour, est déplacé vers la droite, l'élasticité de la languette 135 de l'organe élastique 131 et l'inclinaison des dents 121 font que cette languette 135 se déplace vers la droite en montant sur les dents 121 qui sont maintenues fixes en rotation par le cliquet anti-retour 136.

Le dispositif de rattrapage de jeu qui vient d'être succinctement décrit fonctionne comme expliqué dans la demande ci-dessus citée en référence ; grâce au dispositif de rattrapage 90, les deux rondelles 4 et 6 gardent la même position, en position embrayée, quelle que soit l'usure des garnitures 20, 21.

Le dispositif débrayeur 7 est prévu pour contrecarrer et surmonter à volonté l'action élastique des rondelles Belleville 4,6 en vue de desserrer à volonté les garnitures de friction 20,21 de la friction d'embrayage 2 d'entre le plateau de pression 3 et le plateau de réaction constitué par le volant 1 afin de désengager l'embrayage.

Les rondelles Belleville 4,6 et les moyens élastiques de progressivité 24 permettent de serrer lesdites garnitures entre les plateaux 1,3, la rondelle Belleville 4, ou rondelle de serrage, constituant des moyens embrayeurs à action axiale sollicitant le plateau de pression 3 en direction opposée au fond 80, globalement d'orientation transversale, du couvercle 8. Le fond 80 est dirigé radialement vers l'axe de symétrie axial X-X de l'embrayage.

L'embrayage est ici du type poussé. Il faut donc agir en poussant selon la flèche F sur l'extrémité interne de la partie principale 76 trouée centralement du dispositif débrayeur 7 à l'aide d'une butée de débrayage 200 portée ici par le carter de la boîte de vitesses.

Ainsi, sur la figure 1, l'embrayage est en position engagée (garnitures 20,21 serrées entre les plateaux 1,3).

En position embrayage engagé, le dispositif débrayeur 7 est au contact de l'appui secondaire 72 (jeu zéro), tandis que, lors de la course de débrayage, le jeu entre le dispositif 7 et l'appui 72 augmente, le dispositif débrayeur 7 pivotant autour de l'appui primaire 71.

Plus précisément, la première rondelle Belleville 4, adjacente au plateau de pression 3, est la rondelle négative de serrage, c'est-à-dire que lorsque la hauteur du tronc de cône (ou épaisseur totale) de la rondelle diminue, la charge fournie par la rondelle diminue.

La rondelle Belleville adjacente au dispositif débrayeur 7 est la rondelle positive ou d'assistance. Ainsi, lorsque la hauteur du tronc de cône de la rondelle diminue, la charge fournie par la rondelle augmente. Cette rondelle positive 6 a une action prépondérante par rapport à la rondelle Belleville négative 4. Elle est adaptée à déformer celle-ci, c'est-à-dire à l'aplatir. Sa charge maximum développée est par exemple supérieure en valeur absolue à la charge maximum développée par la rondelle Belleville négative 4. Ici la raideur de la rondelle positive 6 est plus élevée que la raideur de la rondelle négative 4 en valeur absolue. Selon l'invention, la caractéristique charge-écrasement combinant les caractéristiques de la rondelle d'assistance 6 et des moyens élastiques de progressivité 24 suit globalement la caractéristique de la rondelle de serrage 4.

Le jonc 5 assure la transmission des efforts entre les rondelles 4,6.

Le dispositif débrayeur 7 a une partie principale 76 en forme de doigts séparés par des fentes, cette partie principale 76 prolongeant la partie périphérique 75.

Ces doigts ont une plus grande longueur que les doigts d'un diaphragme classique. Ils peuvent être nervurés longitudinalement centralement.

La partie périphérique 75 relie entre eux les doigts et consiste en une simple rondelle avantageusement dotée de fentes radiales borgnes débouchant vers l'extérieur afin que cette rondelle n'exerce pas de charge ou une charge très faible.

On peut ainsi obtenir de grands bras de levier et diminuer la charge à appliquer en 77 (ligne de contact de la butée de débrayage) pour désengager l'embrayage.

Les doigts de la partie principale 76 ont une grande longueur par rapport à la hauteur de la rondelle 75, par exemple, la hauteur de la rondelle 75 et des emboutis 73,74 peut être telle que la distance entre les appuis primaire 71 et d'actionnement 73 soit le dixième de la distance entre l'appui primaire 71 et l'appui 77 pour la butée de débrayage.

Dans la position embrayage engagé, la position de l'appui de manoeuvre 73 est fixe car le levier constituant le dispositif débrayeur 7 est en appui sur les appuis primaire 71 et secondaire 72 du couvercle 8. L'appui secondaire 72 permet donc de définir une position de référence pour le dispositif débrayeur 7.

Les extrémités des doigts 76 du dispositif débrayeur 7 occupent donc toujours la même position quelle que soit l'usure des garnitures de friction 20,21 et/ou des faces de friction 10,30.

Dans cette position, les moyens élastiques de progressivité 24 sont écrasés au maximum. On notera que la partie principale 76 présente un pli pour réduction de l'encombrement axial.

Lors de l'opération de débrayage, en poussant axialement à l'aide de la butée de débrayage 200 en 77 sur l'extrémité interne des doigts de la partie principale 76, le dispositif débrayeur 7 quitte son appui secondaire 72 et un jeu apparaît. L'appui de manoeuvre 73 tend à se rapprocher des zones d'appui 114. La distance entre les zones d'appui 114 et l'appui de manoeuvre 73 tend à diminuer. La rondelle positive 6 s'ouvre, tandis que la rondelle négative 4 se referme et les moyens élastiques de progressivité 24 se détendent.

Du fait des raideurs des rondelles 4,6 et des moyens élastiques de progressivité 24, un nouvel équilibre se crée avec diminution de la charge exercée par les rondelles Belleville sur le plateau de pression, le V délimité par les rondelles Belleville 4,6 se refermant.

Lorsque la butée de débrayage 200 a effectué sa course maximum, le jeu entre l'appui secondaire 72 et le dispositif 7 augmente. La première rondelle Belleville négative 4 se referme, la hauteur de son tronc de cône diminue, tandis que la seconde rondelle Belleville positive 6 s'ouvre, la hauteur de son tronc de cône augmentant.

Les charges des deux rondelles 4,6 diminuent fortement du fait que la première rondelle 4 est négative et la seconde rondelle 6 positive.

Ces rondelles étant alors fortement déchargées, les languettes tangentielles élastiques assurent alors un rappel du plateau de pression 3 vers le fond 80 du couvercle 8. Un jeu apparaît donc entre le plateau de pression 3 et les garnitures 20,21.

On notera qu'une butée annulaire 32 est formée sur la face dorsale 36 du plateau de pression 2, ici par moulage. Cette butée 32 empêche la première rondelle Belleville 4 de se retourner, ce qui entraînerait une augmentation de la charge exercée sur le plateau de pression 3, et un déséquilibrage voire même un réembrayage. Ainsi, des moyens d'anti-retournement sont associés à la première rondelle Belleville 4, qui dès lors est montée sous précontrainte.

Bien entendu, par sécurité on peut prévoir une butée pour limiter la course du dispositif débrayeur 7 de façon à éviter que la seconde rondelle 6 se recharge du fait que la première rondelle 4 est en contact avec l'appui 32.

Ainsi le dispositif débrayeur 7 peut porter des colonnettes traversant des ouvertures pratiquées dans le fond 80 du couvercle 8. La tête des colonnettes vient alors en contact avec la face du fond 80 tourné à l'opposé du plateau de pression 3.

Dans la position embrayée, le dispositif débrayeur 7 a toujours la même position quelle que soit le degré d'usure des garnitures de friction et/ou des faces de friction.

Ainsi qu'on l'aura compris, le jonc 5 constitue un moyen de transmission d'effort de forme arrondie. En variante, on peut remplacer ce jonc par un embouti de forme arrondie pratiqué à la périphérie interne de l'une des rondelles Belleville 4,6.

Cet embouti a par exemple une forme similaire à celui des appuis 71 à 73. Les moyens de transmission d'effort peuvent donc avoir des formes différentes.

Le plateau de pression 3 présente frontalement une face de friction 30 pour coopération avec la friction d'embrayage 2. La face dorsale du plateau de pression, dirigée axialement vers le fond 80 du couvercle 8, est conformée pour former une butée 32 limitant l'inclinaison de la rondelle Belleville négative 4.

Cette butée 32 obtenue par moulage est implantée radialement en dessous des zones d'appui 114 en ayant une hauteur inférieure à celles-ci.

Les rondelles Belleville 4,6, le dispositif de rattrapage d'usure 90 et le dispositif débrayeur 7 sont intercalés entre le couvercle 8 et le plateau de pression 3 pour former avec ceux-ci un ensemble unitaire manipulable et transportable appelé mécanisme d'embrayage. C'est ce mécanisme d'embrayage qui est rapporté sur le volant d'entraînement en rotation 2.

En variante, on peut donner une faible élasticité à la rondelle 75 pour améliorer le confort au niveau de la pédale de commande de la butée de débrayage et exercer une action de rappel.

On peut donner plus de raideur à la rondelle Belleville positive 6 en augmentant par exemple son épaisseur par rapport à la rondelle Belleville négative 4. On peut jouer sur l'angle du tronc de cône des rondelles Belleville 4 et 6 ou tout autre moyen pour que la rondelle Belleville positive 6 soit prépondérante. Les deux rondelles Belleville 4 et 6 peuvent être des rondelles Belleville conventionnelles ou des rondelles Belleville présentant des doigts à leur périphérie interne et/ou externe, en fonction des caractéristiques souhaitées pour chaque application.

La rondelle Belleville positive 6 peut être remplacée par toute autre rondelle ayant une caractéristique linéaire semblable. Ainsi, la rondelle positive 6 peut être une rondelle ondulée à action axiale. La définition rondelle Belleville positive englobe donc ce type de variante.

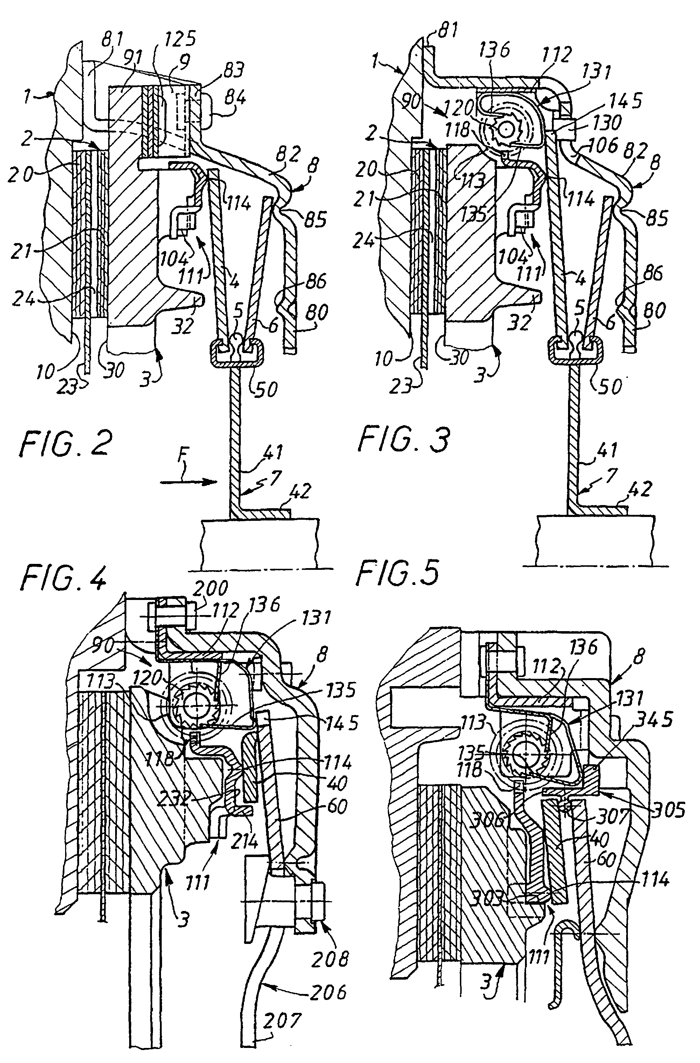

Les embrayages représentés partiellement sur les figures 2 à 5 sont du genre de ceux représentés sur les figures 1 à 4 du document FR-A- 2 761 739, dont la description correspondante fait partie de la présente demande.

Selon la variante des figures 2 et 3, le dispositif débrayeur 7 comprend un plateau transversal 41 portant à sa périphérie externe le jonc annulaire 5 de transmission d'effort ; le plateau transversal 41 est relié par sa périphérie interne à un manchon 42 monté coulissant axialement.

Ce dispositif débrayeur 7 est prévu pour contrecarrer et surmonter à volonté l'action élastique des rondelles Belleville 4 et 6 en vue de desserrer à volonté les garnitures de friction 20, 21 et la friction d'embrayage 2 d'entre le plateau de pression 3 et le plateau de réaction 1 afin de désengager l'embrayage.

Le manchon 42 du dispositif débrayeur 7 peut être déplacé, en vue de l'opération de débrayage, dans un sens ou dans l'autre, c'est-à-dire dans le sens de la flèche F, l'embrayage étant du type tiré, ou de sens contraire à celui de la flèche F, l'embrayage étant du type poussé : ceci dépend du choix des caractéristiques relatives des première 4 et seconde 6 rondelles Belleville.

La figure 2 montre le cas d'un embrayage poussé, c'est-à-dire que le débrayage est obtenu en agissant, au niveau du manchon 42, dans le sens contraire de celui de la flèche F ; la seconde rondelle Belleville 6 est ici la rondelle positive ou d'assistance et la première rondelle 4 est la rondelle négative ou de serrage.

Sur la figure 2, l'embrayage est représenté embrayé sous la charge de la seconde rondelle Belleville 6, transmise au plateau de pression 3, via les moyens de transmission d'effort 5, ici en forme de jonc, par la première rondelle Belleville 4 en appui par sa périphérie externe sur les zones d'appui 114 et par sa périphérie interne sur la butée annulaire 32.

Lors d'une action sur le manchon 42 dans le sens contraire de celui de la flèche F, la rondelle positive 6 est en quelque sorte comprimée, sa charge exercée augmentant et sa périphérie interne étant rapprochée du fond 80 du couvercle 8 ; cette compression est assistée par la rondelle de serrage 4 qui libère l'énergie emmagasinée, en position embrayée, sous l'effet de la rondelle positive 6, prépondérante, pendant l'opération d'embrayage. La course de compression de la rondelle positive 6 est limitée au niveau du dispositif débrayeur 7 ou, comme représenté, par un embouti 86 du fond 80 du couvercle 6 avec lequel la rondelle positive 6 vient coopérer en fin d'opération de débrayage.

On comprendra aisément que pour réaliser un embrayage du type poussé, c'est-à-dire dans lequel l'opération de débrayage est obtenue en agissant sur le manchon 42 en sens inverse de celui de la flèche F, il suffit d'échanger les caractéristiques des rondelles 4 et 6 : selon cette variante, donc, non représentée, la première rondelle Belleville 4 est la rondelle d'assistance et la seconde rondelle Belleville 6 est la rondelle de serrage. Ici, en position embrayée, la première rondelle 4 est à distance de la butée annulaire 32 et la deuxième rondelle 6 est en appui à la fois sur les emboutis 85 et 86 du fond 80 du couvercle 8 ; la butée annulaire 32 joue ici le rôle de limitation de course de débrayage.

Sur ces figures, sont visibles les languettes tangentielles 9, et les rivets 84 et 125 pour leur fixation, ainsi que les pattes 91, en saillie radiale, du plateau de pression. Dans ces figures, le dispositif de rattrapage d'usure 90 est identique à celui de la figure 1.

Selon la variante de la figure 4, la seconde rondelle élastique 60, la plus éloignée du plateau de pression 3, est la partie périphérique externe d'un diaphragme 206 prolongée vers l'intérieur par une partie centrale 207 fragmentée en doigts radiaux formant le dispositif débrayeur ; le diaphragme 206 est monté articulé sur le couvercle 8 de manière classique grâce à des colonnettes 208, l'embrayage étant ici du type poussé. La seconde rondelle Belleville 60 est donc la rondelle de serrage et la première rondelle Belleville 40 la rondelle d'assistance.

Sur la figure 4, les pièces ou parties des pièces identiques à, ou jouant le même rôle que, celles de la variante précédente portent les mêmes références.

Ici, c'est la seconde rondelle Belleville 60 qui porte l'actionneur 145, en forme d'appendice radial, pour actionner la languette de commande 135 de l'organe élastique 131 du dispositif de rattrapage d'usure 90 ; ici, le cliquet anti-retour 36 et la languette 135 sont disposées globalement orthogonalement ; le support 112 et l'organe élastique 131 sont fixés au couvercle 8 par des rivets 200.

Ici, la première rondelle 40 et la seconde rondelle 60 sont inclinées dans le sens inverse par rapport à la variante des figures 2 et 3 et donc s'appuient l'une sur l'autre par leur périphérie externe. C'est au voisinage de sa partie médiane que la première rondelle 40 coopère avec les zones d'appui 114 de l'anneau en tôle des moyens à rampes 111 ; ici, ledit anneau présente un rebord axial cylindrique 214 dirigé vers le fond du couvercle 8 et centrant la première rondelle 40 par la périphérie interne de celle-ci ; le flanc transversal 232 bordé, d'un côté, par les zones d'appui 114 et, de l'autre côté, par le rebord axial 214 limite le basculement de la première rondelle 40 lors du débrayage ; ici, la seconde rondelle 60 est la rondelle de serrage et la première rondelle 40 la rondelle d'assistance.

Selon la variante représentée sur la figure 5, la seconde rondelle est également, comme dans la variante de la figure 4, constituée par la partie périphérique externe d'un diaphragme prolongée vers l'intérieur par une partie centrale fragmentée en doigts radiaux par des fentes et l'embrayage est du type poussé. La première rondelle Belleville 40 est donc la rondelle d'assistance et la seconde rondelle Belleville 60 la rondelle de serrage.

Par rapport à la variante de la figure 4, ici des moyens de transmission d'effort 305 sont prévus et comportent une jupe cylindrique annulaire 306 à laquelle est rattaché intérieurement un jonc 307 intercalé entre les rondelles 40 et 60 à leur périphérie externe ; la jupe 306 centre la première rondelle 40 par rapport à la seconde rondelle 60 elle-même positionnée par le diaphragme à laquelle elle appartient, le diaphragme étant positionné classiquement grâce à des colonnettes fixées au couvercle non visibles sur la figure.

Ici, c'est la jupe 306 qui, à sa partie externe côté couvercle, porte l'actionneur 345, en forme d'appendice radial, pour actionner la languette de commande 135 de l'organe élastique 131 du dispositif de rattrapage d'usure.

Ici, l'anneau en tôle des moyens à rampes 111, qui porte les dents 118, est centré à sa périphérie interne par un redent cylindrique 303 ménagé dans le plateau de pression 3 ; ledit anneau présente, vers sa périphérie interne côté couvercle, les zones d'appui 114 avec lesquelles coopère la première rondelle 4 par sa périphérie interne.

Bien entendu, il est possible d'utiliser d'autres types de dispositif débrayeur 7, tels que ceux décrits par exemple aux figures 3 et 4 du document FR-A-2 761 738, dont la description correspondante fait partie de la présente demande.

Selon la variante de la figure 3 de cette demande antérieure, le dispositif débrayeur comprend un disque annulaire portant dans sa partie radialement médiane, par exemple par rivetage, les moyens de transmission d'effort 5 ; les rondelles Belleville de serrage et d'assistance sont placées de part et d'autre du disque annulaire ; celui-ci présente également à sa périphérie externe des pattes traversant des ouvertures ménagées dans la jupe périphérique cylindrique 82 du couvercle 8 ; ces pattes sont adaptées à prendre appui sur un bord de ces ouvertures lorsque la partie voisine de la périphérie interne du disque annulaire est déplacée axialement par la butée de débrayage 200, de la droite vers la gauche par rapport à la figure, en vue d'effectuer l'opération de débrayage, l'embrayage étant représenté du type poussé.

On pourrait, bien entendu, comme précédemment, en inversant le rôle des rondelles, réaliser en variante un embrayage du type tiré ayant un dispositif débrayeur en forme de disque, tel que celui-ci.

Selon la variante représentée sur la figure 4 de cette demande antérieure, le dispositif débrayeur comprend un disque ayant une partie centrale en forme de doigts séparés par des fentes, cette partie centrale prolongeant une partie annulaire périphérique. Ces doigts peuvent être nervurés longitudinalement centralement. La partie annulaire relie entre eux les doigts et consiste en une simple rondelle éventuellement dotée de fentes radiales borgnes débouchant vers l'extérieur afin que cette rondelle n'exerce pas de charge, ou une charge très faible, axialement.

En variante, on peut donner une faible élasticité à la partie périphérique pour améliorer le confort au niveau de la pédale de commande de la butée de débrayage 200 et exercer une action de rappel.

Le disque est monté à articulation à la périphérie interne du fond 80 du couvercle 8, entre deux appuis, l'un en forme de jonc, l'autre en forme d'embouti du fond 80 du couvercle 8, entre lesquels il est maintenu grâce à des pattes rabattues du couvercle ; ainsi, le disque est monté à articulation à la manière d'un diaphragme d'embrayage. Sur cette figure, telle qu'est représentée la butée de débrayage 200, l'embrayage est du type tiré mais bien entendu, comme expliqué ci-dessus, il pourrait être facilement transformé en embrayage poussé, en échangeant les rondelles.

## Revendications

1. Embrayage à friction, notamment pour véhicules automobiles, comportant une friction d'embrayage (2) et un mécanisme d'embrayage ayant un couvercle (8) avec un fond (80) d'orientation transversale et des moyens de fixation (81) pour fixation du mécanisme d'embrayage sur un volant d'entraînement (1) en rotation, un plateau de pression (3) présentant frontalement une face de friction (30) pour coopération avec la friction d'embrayage (2), des languettes élastiques (9) pour liaison en rotation, avec mobilité axiale, du plateau de pression (3) avec le couvercle (8), et, interposés entre le plateau de pression (3) et le fond (80) du couvercle (8), d'une part, des moyens élastiques embrayeurs à action axiale (4,60) sollicitant axialement le plateau de pression (8) en direction opposée du fond (80) du couvercle (8) et, d'autre part, un dispositif débrayeur (7) pour contrecarrer à volonté l'action desdits moyens élastiques embrayeurs (4,60) et déplacer le plateau de pression en direction du fond (80) du couvercle (8) sur une distance dite levée de plateau, le mécanisme d'embrayage étant équipé d'un dispositif de rattrapage d'usure (90) d'au moins des garnitures de la friction d'embrayage (2) et de moyens élastiques d'assistance (6,40) pour assister l'effort de débrayage, des moyens élastiques de progressivité (24) étant montés au sein de la friction d'embrayage (2) et n'intervenant axialement que sur une course du plateau de pression, les moyens élastiques d'assistance (6, 40) étant montés à l'extérieur de la friction d'embrayage (2), **caractérisé par le fait que** la caractéristique charge-écrasement combinant les caractéristiques charge-écrasement des moyens élastiques d'assistance (6,40) et de progressivité (24) suit globalement la caractéristique charge-écrasement des moyens élastiques embrayeurs à action axiale (4,60).

2. Embrayage selon la revendication 1, **caractérisé par le fait que** les moyens élastiques de progressivité (24) n'interviennent axialement que sur une course du plateau de pression au plus égale au tiers de la levée ou course du plateau de pression.

3. Embrayage selon l'une des revendications 1 ou 2, **caractérisé par le fait que** les moyens élastiques embrayeurs (4,60) et les moyens élastiques d'assistance (6,40) sont constitués chacun d'une rondelle Belleville, les deux rondelles Belleville étant montées en série et placées axialement entre le plateau de pression (3) et le fond (80) du couvercle (8).

4. Embrayage selon l'une des revendications 1 à 3, **caractérisé par le fait que** la première rondelle Belleville (4) est dite rondelle Belleville (4) négative, sa charge fournie diminuant lorsque la hauteur de son tronc de cône diminue, et la seconde rondelle Belleville (6) est dite rondelle Belleville positive, sa charge fournie augmentant lorsque la hauteur de son tronc de cône diminue.

5. Embrayage selon l'une des revendications 1 à 4, **caractérisé par le fait que** le plateau de pression (3) présente dorsalement une butée (32) située radialement en-dessous des zones d'appui (114) pour limiter l'inclinaison de la première rondelle Belleville (4).

6. Embrayage selon l'une des revendications 1 à 5, **caractérisé par le fait que** des moyens de transmission d'effort (5) sont intercalés entre les périphéries internes des première (4) et seconde (6) rondelles Belleville.

7. Embrayage selon l'une des revendications 3 à 6, **caractérisé par le fait que** les rondelles Belleville (4, 6) sont maintenues en contact avec les moyens de transmission d'effort (5) par une pince élastique (50), éventuellement fractionnée, venant en prise avec les faces externes des rondelles Belleville (4,6).

8. Embrayage selon l'une des revendications 3 à 7, **caractérisé par le fait que** le dispositif débrayeur (7) est de forme annulaire et les deux rondelles Belleville (4, 6) sont montées en série entre le plateau de pression (3) et un appui de manoeuvre (73) porté par le dispositif débrayeur (7) qui est monté à sa périphérie externe de manière pivotante sur un appui primaire (71) porté par le fond (80) du couvercle (8) radialement au-dessus de l'appui de manoeuvre (73), lui-même implanté radialement au-dessus d'un appui secondaire (72) porté par le fond (80) du couvercle (8).

9. Embrayage selon la revendication 8, **caractérisé par le fait que**, le dispositif de rattrapage d'usure (90) comportant des moyens à rampes (111) présentant des rampes disposées circonférentiellement et des zones d'appui (114), la première rondelle Belleville (4) est en contact à sa périphérie externe avec les zones d'appui (114), tandis que la seconde rondelle Belleville (6) s'appuie à sa périphérie externe sur l'appui de manoeuvre (73), lesdites rondelles (4, 6) étant inclinées en sens inverse.

10. Embrayage selon l'une des revendications 8 ou 9, **caractérisé par le fait que** le dispositif débrayeur (7) comporte une partie périphérique (75) de forme annulaire prolongée par une partie principale (76) fragmentée en doigts radiaux par des fentes.

11. Embrayage selon la revendication 10, **caractérisé par le fait que** l'appui de manoeuvre (73) est formé par emboutissage et se raccorde à la périphérie interne de la partie périphérique annulaire (75) du dispositif débrayeur (7) par un embouti (74) dirigé axialement en sens inverse de l'appui de manoeuvre (73).

12. Embrayage selon l'une des revendications 10 ou 11, **caractérisé par le fait que** la partie périphérique (75) du dispositif débrayeur (7) est décalée axialement par rapport à sa partie principale.

13. Embrayage selon l'une des revendications 8 à 12, **caractérisé par le fait que** l'appui primaire (71) est décalé axialement par rapport à l'appui secondaire (72).

14. Embrayage selon l'une des revendications 6 à 13, **caractérisé en ce que** les moyens de transmission d'effort (5) consistent en un jonc.

15. Embrayage selon l'une des revendications 3 à 7, **caractérisé par le fait que**, le dispositif de rattrapage d'usure (90) comportant des moyens à rampes (111) présentant des rampes disposées circonférentiellement et des zones d'appui (114), la première rondelle Belleville (4) est en contact avec les zones d'appui (114), tandis que la seconde rondelle Belleville (6) s'appuie sur le couvercle (8).

16. Embrayage selon la revendication 15, **caractérisé par le fait que** la première rondelle (4) est en contact par sa périphérie externe avec les zones d'appui (114) tandis que la seconde rondelle (6) s'appuie par sa périphérie externe sur le couvercle (8).

17. Embrayage selon l'une des revendications 15 ou 16, **caractérisé par le fait que** les moyens de transmission d'effort (5) sont portés par le dispositif débrayeur (7).

18. Embrayage selon la revendication 15, **caractérisé par le fait que** la première rondelle (40) est en contact par sa partie médiane avec les zones d'appui (114) tandis que la seconde rondelle (60) s'appuie par sa périphérie interne sur le couvercle (8).

19. Embrayage selon la revendication 15, **caractérisé par le fait que** la première rondelle (40) est en contact par sa périphérie interne avec les zones d'appui (114) tandis que la seconde rondelle (60) s'appuie par sa périphérie interne sur le couvercle (8).

20. Embrayage selon l'une des revendications 15 à 19, **caractérisé par le fait que** le fond (80) du couvercle (8) porte une butée (86) pour limiter l'inclinaison de la seconde rondelle Belleville (6).

21. Embrayage selon l'une des revendications 15 à 20, **caractérisé par le fait que** la seconde rondelle élastique (60) est la partie périphérique externe d'un diaphragme (206) prolongée vers l'intérieur par une partie centrale (207) fragmentée en doigts radiaux par des fentes.

22. Embrayage selon l'une des revendications 15 à 21, **caractérisé par le fait que** le dispositif débrayeur (7) comprend un plateau transversal (41) portant à sa périphérie externe les moyens de transmission d'effort (5) et relié par sa périphérie interne à un manchon (42) monté coulissant axialement.

23. Embrayage selon l'une des revendications 15 à 21, **caractérisé par le fait que** le dispositif débrayeur (7) comprend un disque annulaire (61) portant dans sa partie radialement médiane les moyens de transmission d'effort (5) et présentant, à sa périphérie externe, des pattes (62) traversant des ouvertures (18) ménagées dans une jupe périphérique cylindrique (82) que présente le couvercle (8), les pattes (62) du disque annulaire (61) étant adaptées à prendre appui sur un bord de ces ouvertures (18) lorsque la partie voisine de sa périphérie interne du disque annulaire (61) est déplacée axialement.

24. Embrayage selon l'une des revendications 15 à 21, **caractérisé par le fait que** le dispositif débrayeur (7) comprend un disque (75) comportant une partie annulaire (72) prolongée vers l'axe par une partie centrale (76) fragmentée en doigts radiaux par des fentes, les moyens de transmission d'effort (5) étant placés à la périphérie externe de ladite partie annulaire (72) elle-même montée à articulation à la périphérie interne du fond (80) du couvercle (8).

25. Embrayage selon l'une des revendications 1 à 24, **caractérisé par le fait que** le dispositif de rattrapage d'usure (90) est actionné par les moyens élastiques embrayeurs (4, 60).

26. Embrayage selon l'une des revendications 6 à 25, **caractérisé par le fait que** le dispositif de rattrapage d'usure (90) est actionné par les moyens de transmission d'effort (305).

27. Embrayage selon l'une des revendications 1 à 26, **caractérisé par le fait que** les moyens de progressivité (24) sont réalisés en conformant le disque de support (23), de la friction d'embrayage (2), qui porte les garnitures de friction (20,21).

28. Embrayage selon la revendication 27, **caractérisé par le fait que** le disque de support (23) présente une partie périphérique comportant des pales radiales par exemple du type tripode.

29. Embrayage selon la revendication 28, **caractérisé par le fait que** chaque pale présente une zone centrale de portée destinée à la fixation de l'une des garnitures de friction (20, 21) et deux zones périphériques externes de portée destinées à coopérer avec l'autre des garnitures de friction (21,20).

30. Embrayage selon la revendication 28, **caractérisé par le fait que** les zones de portée sont décalées axialement par rapport à la partie centrale du disque de support (23), la zone centrale de portée étant reliée à ladite partie centrale par un pli tangentiel, tandis que les zones de portée périphériques sont reliées à ladite zone centrale de portée par des plis obliques.

31. Embrayage selon l'une des revendications 28 à 30, **caractérisé par le fait que** les moyens de progressivité (24) sont agencés en sorte que les phénomènes d'incrustation des garnitures de friction (20,21) dans les pales radiales sont minimisés.

## Patentansprüche

1. Reibungskupplung, insbesondere für Kraftfahrzeuge, umfassend eine Reibungskupplungsscheibe (2) und einen Kupplungsmechanismus, der einen Deckel (8) mit einem quer ausgerichteten Boden (80) und Befestigungsmittel (81) für die Befestigung des Kupplungsmechanismus an einem Schwungrad (1) umfaßt, eine Druckplatte (3), die stirnseitig eine Reibfläche (30) für das Zusammenwirken mit der Reibungskupplungsscheibe (2) aufweist, elastische Zungen (9) für die drehfeste und axial bewegliche Verbindung der Druckplatte (3) mit dem Deckel (8) und, zwischen der Druckplatte (3) und dem Boden (80) des Deckels (8) eingefügt, einerseits axial wirksame elastische Einrückmittel (4, 60), welche die Druckplatte (3) axial in der zum Boden (80) des Dekkels (8) entgegengesetzten Richtung beaufschlagen, und andererseits eine Ausrückvorrichtung (7), um der Wirkung der besagten elastischen Einrückmittel (4, 60) nach Belieben entgegenzuwirken und die Druckplatte in Richtung des Bodens (80) des Deckels (8) auf einen als Plattenhub bezeichneten Abstand zu verschieben, wobei der Kupplungsmechanismus mit einer Verschleißnachstellvorrichtung (90) für den Verschleiß wenigstens der Reibbeläge der Reibungskupplungsscheibe (2) und mit elastischen Unterstützungsmitteln (6, 40) ausgerüstet ist, um die Ausrückkraft zu unterstützen, wobei elastische Progressivitätsmittel (24) in Innern der Reibungskupplungsscheibe (2) angebracht sind und axial nur auf einem Verstellweg der Druckplatte wirksam werden, wobei die elastischen Unterstützungsmittel (6, 40) außerhalb der Reibungskupplungsscheibe (2) angebracht sind, **dadurch gekennzeichnet, daß** die Belastungs-/Stauchungs-Kennlinie, welche die Belastungs-/ Stauchungs-Kennlinien der elastischen Unterstützungs- (6, 40) und Progressivitätsmittel (24) kombiniert, insgesamt der Belastungs-/Stauchungs-Kennlinie der axial wirksamen elastischen Einrückmittel (4, 60) folgt.

2. Kupplung nach Anspruch 1, **dadurch gekennzeichnet, daß** die elastischen Progressivitätsmittel (24) axial nur auf einem Verstellweg der Druckplatte höchstens gleich einem Drittel des Hubs oder Verstellwegs der Druckplatte wirksamen werden.

3. Kupplung nach einem der Ansprüche 1 oder 2, **dadurch gekennzeichnet, daß** die elastischen Einrückmittel (4, 60) und die elastischen Unterstützungsmittel (4, 60) jeweils aus einer Tellerfeder bestehen, wobei die beiden Tellerfedern in Reihe eingebaut und axial zwischen der Druckplatte (3) und dem Boden (80) des Deckels (8) angebracht sind.

4. Kupplung nach einem der Ansprüche 1 bis 3, **dadurch gekennzeichnet, daß** die erste Tellerfeder (4) als negative Tellerfeder bezeichnet wird, insoweit sich ihre abgegebene Belastung verringert, wenn die Höhe ihres Kegelstumpfes abnimmt, und die zweite Tellerfeder (6) als positive Tellerfeder bezeichnet wird, insoweit sich ihre abgegebene Belastung erhöht, wenn die Höhe ihres Kegelstumpfes abnimmt.

5. Kupplung nach einem der Ansprüche 1 bis 4, **dadurch gekennzeichnet, daß** die Druckplatte (3) rückseitig einen Anschlag (32) aufweist, der sich radial unterhalb der Auflagebereiche (114) befindet, um die Neigung der ersten Tellerfeder (4) zu begrenzen.

6. Kupplung nach einem der Ansprüche 1 bis 5, **dadurch gekennzeichnet, daß** Kraftübertragungsmittel (5) zwischen den inneren Umfängen der ersten (4) und zweiten (6) Tellerfedern eingefügt sind.

7. Kupplung nach einem der Ansprüche 3 bis 6, **dadurch gekennzeichnet, daß** die Tellerfedern (4, 6) mit den Kraftübertragungsmitteln (5) durch eine, gegebenenfalls unterteilte, elastische Klemme (50) in Kontakt gehalten werden, die mit den Außenflächen der Tellerfedern (4, 6) in Eingriff kommt.

8. Kupplung nach einem der Ansprüche 3 bis 7, **dadurch gekennzeichnet, daß** die Ausrückvorrichtung (7) eine Ringform aufweist und die beiden Tellerfedern (4, 6) in Reihe zwischen der Druckplatte (3) und einer Betätigungsauflage (73) gelagert sind, die an der Ausrückvorrichtung (7) angebracht ist, die an ihrem äußeren Umfang kippbar auf einer Primärauflage (71) gelagert ist, die am Boden (80) des Deckels (8) radial oberhalb der Betätigungsauflage (73) angebracht ist, die wiederum radial oberhalb einer am Boden (80) des Deckels (8) angebrachten Sekundärauflage (72) angeordnet ist.

9. Kupplung nach Anspruch 8, **dadurch gekennzeichnet, daß**, insoweit die Verschleißnachstellvorrichtung (90) Rampenmittel (111) umfaßt, die umfangsmäßig angeordnete Rampen und Auflagebereiche (114) aufweisen, die erste Tellerfeder (4) an ihrem äußeren Umfang mit den Auflagebereichen (114) in Kontakt steht, während die zweite Tellerfeder (6) an ihrem äußeren Umfang an der Betätigungsauflage (73) anliegt, wobei die besagten Tellerfedern (4, 6) in entgegengesetzter Richtung geneigt sind.

10. Kupplung nach einem der Ansprüche 8 oder 9, **dadurch gekennzeichnet, daß** die Ausrückvorrichtung (7) einen ringförmigen Umfangsteil (75) umfaßt, der durch einen Hauptteil (76) verlängert wird, der durch Schlitze in radiale Finger unterteilt ist.

11. Kupplung nach Anspruch 10, **dadurch gekennzeichnet, daß** die Betätigungsauflage (73) durch Tiefziehen gebildet ist und sich an den inneren Umfang des ringförmigen Umfangsteils (75) der Ausrückvorrichtung (7) durch eine axial in der zur Betätigungsauflage (73) entgegengesetzten Richtung verlaufende Ausbuchtung (74) anschließt.

12. Kupplung nach einem der Ansprüche 10 oder 11, **dadurch gekennzeichnet, daß** der Umfangsteil (75) der Ausrückvorrichtung (7) im Verhältnis zu ihrem Hauptteil axial versetzt ist.

13. Kupplung nach einem der Ansprüche 8 bis 12, **dadurch gekennzeichnet, daß** die Primärauflage (71) im Verhältnis zur Sekundärauflage (72) axial versetzt ist.

14. Kupplung nach einem der Ansprüche 6 bis 13, **dadurch gekennzeichnet, daß** die Kraftübertragungsmittel (5) aus einem Sprengring bestehen.

15. Kupplung nach einem der Ansprüche 3 bis 7, **dadurch gekennzeichnet, daß**, insoweit die Verschleißnachstellvorrichtung (90) Rampenmittel (111) mit umfangsmäßig angeordneten Rampen und Auflagebereichen (114) umfaßt, die erste Tellerfeder (4) mit den Auflagebereichen (114) in Kontakt steht, während die zweite Tellerfeder (6) am Deckel (8) anliegt.

16. Kupplung nach Anspruch 15, **dadurch gekennzeichnet, daß** sich die erste Tellerfeder (4) durch ihren äußeren Umfang mit den Auflagebereichen (114) in Kontakt befindet, während die zweite Tellerfeder (6) durch ihren äußeren Umfang am Deckel (8) anliegt.

17. Kupplung nach einem der Ansprüche 15 oder 16, **dadurch gekennzeichnet, daß** die Kraftübertragungsmittel (5) an der Ausrückvorrichtung (7) angebracht sind.

18. Kupplung nach Anspruch 15, **dadurch gekennzeichnet, daß** sich die erste Tellerfeder (40) durch ihren Mittelteil mit den Auflagebereichen (114) in Kontakt befindet, während die zweite Tellerfeder (60) durch ihren inneren Umfang am Deckel (8) anliegt.

19. Kupplung nach Anspruch 15, **dadurch gekennzeichnet, daß** sich die erste Tellerfeder (40) durch ihren inneren Umfang mit den Auflagebereichen (114) in Kontakt befindet, während die zweite Tellerfeder (60) durch ihren inneren Umfang am Deckel (8) anliegt.

20. Kupplung nach einem der Ansprüche 15 bis 19, **dadurch gekennzeichnet, daß** der Boden (80) des Deckels (8) einen Anschlag (86) trägt, um die Neigung der zweiten Tellerfeder (6) zu begrenzen.

21. Kupplung nach einem der Ansprüche 15 bis 20, **dadurch gekennzeichnet, daß** die zweite Tellerfeder (60) der äußere Umfangsteil einer Membranfeder (206) ist, der nach innen durch einen durch Schlitze in radiale Finger unterteilten Mittelteil (207) verlängert wird.

22. Kupplung nach einem der Ansprüche 15 bis 21, **dadurch gekennzeichnet, daß** die Ausrückvorrichtung (7) eine Querplatte (41) umfaßt, die an ihrem äußeren Umfang Kraftübertragungsmittel (5) trägt und durch ihren inneren Umfang mit einer axial verschiebbar gelagerten Muffe (42) verbunden ist.

23. Kupplung nach einem der Ansprüche 15 bis 21, **dadurch gekennzeichnet, daß** die Ausrückvorrichtung (7) eine ringförmige Scheibe (61) umfaßt, die in ihrem radial mittleren Teil die Kraftübertragungsmittel (5) trägt und an ihrem äußeren Umfang Ansätze (62) aufweist, die durch Öffnungen (18) hindurchgehen, die in eine zylindrische Umfangseinfassung (82) eingearbeitet sind, die der Deckel (8) aufweist, wobei die Ansätze (62) der ringförmigen Scheibe (61) so gestaltet sind, daß sie an einem Rand dieser Öffnungen (18) zur Anlage kommen können, wenn der ihrem inneren Umfang benachbarte Teil der ringförmigen Scheibe (61) axial verschoben wird.

24. Kupplung nach einem der Ansprüche 15 bis 21, **dadurch gekennzeichnet, daß** die Ausrückvorrichtung (7) eine Scheibe (75) enthält, die einen ringförmigen Teil (72) umfaßt, der zur Achse hin durch einen durch Schlitze in radiale Finger unterteilten Mittelteil (76) verlängert wird, wobei die Kraftübertragungsmittel (5) am äußeren Umfang des besagten ringförmigen Teils (72) angebracht sind, der seinerseits am inneren Umfang des Bodens (80) des Deckels (8) gelenkig gelagert ist.

25. Kupplung nach einem der Ansprüche 1 bis 24, **dadurch gekennzeichnet, daß** die Verschleißnachstellvorrichtung (90) durch die elastischen Ausrückmittel (4, 60) betätigt wird.

26. Kupplung nach einem der Ansprüche 6 bis 25, **dadurch gekennzeichnet, daß** die Verschleißnachstellvorrichtung (90) durch die Kraftübertragungsmittel (305) betätigt wird.

27. Kupplung nach einem der Ansprüche 1 bis 26, **dadurch gekennzeichnet, daß** die Progressivitätsmittel (24) durch eine entsprechende Gestaltung der Trägerscheibe (23) der Reibungskupplungsscheibe (2), welche die Reibbeläge (20, 21) trägt, ausgeführt sind.

28. Kupplung nach Anspruch 27, **dadurch gekennzeichnet, daß** die Trägerscheibe (23) einen Umfangsteil aufweist, der radiale Segmente, beispielsweise in der Ausführung mit drei Auflagestellen, umfaßt.

29. Kupplung nach Anspruch 28, **dadurch gekennzeichnet, daß** jedes Segment einen mittleren Auflagebereich, der zur Befestigung eines der Reibbeläge (20, 21) bestimmt ist, und zwei äußere Umfangsauflagebereiche aufweist, die für das Zusammenwirken mit dem anderen der Reibbeläge (21, 22) bestimmt sind.

30. Kupplung nach Anspruch 28, **dadurch gekennzeichnet, daß** die Auflagebereiche im Verhältnis zum Mittelteil der Trägerscheibe (23) axial versetzt sind, wobei der mittlere Auflagebereich mit dem besagten Mittelteil durch eine tangentiale Biegung verbunden ist, während die Umfangsauflagebereiche mit dem besagten Mittelteil durch Schrägbiegungen verbunden sind.

31. Kupplung nach einem der Ansprüche 28 bis 30, **dadurch gekennzeichnet, daß** die Progressivitätsmittel (24) so angeordnet sind, daß die Eindrückerscheinungen der Reibbeläge (20, 21) in den radialen Segmenten minimiert werden.

## Claims

1. A friction clutch, in particular for motor vehicles, comprising a clutch friction means (2) and a clutch mechanism having a cover (8) with an end portion (80) of transverse orientation and fixing means (81) for non-rotatably fixing the clutch mechanism to a drive flywheel (1), a pressure plate (3) frontally comprising a friction face (30) for co-operating with the clutch friction means (2), resilient tongues (9) for non-rotatably connecting the pressure plate (3) to the cover (8) with axial mobility, and, interposed between the pressure plate (3) and the end portion (80) of the cover (8), on the one hand resilient clutch engagement means (4, 60) with an axial action which axially urge the pressure plate (8) in the opposite direction to the end portion (80) of the cover (8) and on the other hand a clutch disengagement device (7) for opposing as desired the action of said resilient clutch engagement means (4, 60) and displacing the pressure plate in the direction of the end portion (80) of the cover (8) over a distance referred to as the plate lift distance, the clutch mechanism being provided with a device (90) for taking up wear of at least the linings of the clutch friction means (2) and resilient assistance means (6, 40) for assisting with the clutch disengagement force, resilient progressivity means (24) being mounted within the clutch friction means (2) and being operative axially only over a travel of the pressure plate, the resilient assistance means (6, 40) being mounted on the outside of the clutch friction means (2), **characterised in that** the load-crushing characteristic combining the load-crushing characteristics of the resilient assistance (6, 40) and progressivity (24) means overall follows the load-crushing characteristic of the axially acting resilient clutch engagement means (4, 60).

2. A clutch according to claim 1 **characterised in that** the resilient progressivity means (24) are operative axially only over a travel of the pressure plate that is at most equal to a third of the pressure plate travel or lift.

3. A clutch according to one of claims 1 and 2 **characterised in that** the resilient clutch engagement means (4, 60) and the resilient assistance means (6, 40) are each formed by a Belleville disc, the two Belleville discs being mounted in series and placed axially between the pressure plate (3) and the end portion (80) of the cover (8).

4. A clutch according to one of claims 1 to 3 **characterised in that** the first Belleville disc (4) is referred to as a negative Belleville disc (4), its load produced decreasing when the height of its frustoconical configuration decreases, and the second Belleville disc (6) is referred to as a positive Belleville disc, its load produced increasing when the height of its frustoconical configuration decreases.

5. A clutch according to one of claims 1 to 4 **characterised in that** the pressure plate (3) dorsally has an abutment (32) disposed radially below the support zones (114) for limiting the inclination of the first Belleville disc (4).

6. A clutch according to one of claims 1 to 5 **characterised in that** force transmission means (5) are interposed between the inside peripheries of the first and second Belleville discs (4 and 6).

7. A clutch according to one of claims 3 to 6 **characterised in that** the Belleville discs (4, 6) are held in contact with the force transmission means (5) by a resilient gripping means (50) which is possibly divided into portions and which comes into engagement with the external faces of the Belleville discs (4, 6).

8. A clutch according to one of claims 3 to 7 **characterised in that** the clutch disengagement device (7) is of an annular shape and the two Belleville discs (4, 6) are mounted in series between the pressure plate (3) and an operating support (73) carried by the clutch disengagement device (7) which is mounted at its outside periphery pivotably on a primary support (71) carried by the end portion (80) of the cover (8) radially above the operating support (73) which is itself disposed radially above a secondary support (72) carried by the end portion (80) of the cover (8).

9. A clutch according to claim 8 **characterised in that**, the wear take-up device (90) comprising ramp means (111) having circumferentially disposed ramps and support zones (114), the first Belleville disc (4) is in contact at its outside periphery with the support zones (114) while the second Belleville disc (6) is supported at its outside periphery against the operating support (73), said discs (4, 6) being inclined in opposite directions.

10. A clutch according to one of claims 8 and 9 **characterised in that** the clutch disengagement device (7) comprises a peripheral portion (75) of annular shape prolonged by a main portion (76) which is divided into radial fingers by slots.

11. A clutch according to claim 10 **characterised in that** the operating support (73) is formed by stamping and is connected to the inside periphery of the annular peripheral portion (75) of the clutch disengagement device (7) by a stamped portion (74) directed axially in the opposite direction to the operating support (73).

12. A clutch according to one of claims 10 and 11 **characterised in that** the peripheral portion (75) of the clutch disengagement device (7) is displaced axially with respect to its main portion.

13. A clutch according to one of claims 8 to 12 **characterised in that** the primary support (71) is displaced axially with respect to the secondary support (72).

14. A clutch according to one of claims 6 to 13 **characterised in that** the force transmission means (5) comprise a ring.

15. A clutch according to one of claims 3 to 7 **characterised in that**, the wear take-up device (90) comprising ramp means (111) having ramps disposed circumferentially and support zones (114), the first Belleville disc (4) is in contact with the support zones (114) while the second Belleville disc (6) bears against the cover (8).

16. A clutch according to claim 15 **characterised in that** the first disc (4) is in contact by way of its outside periphery with the support zones (114) while the second disc (6) bears by way of its outside periphery against the cover (8).

17. A clutch according to one of claims 15 and 16 **characterised in that** the force transmission means (5) are carried by the clutch disengagement device (7).

18. A clutch according to claim 15 **characterised in that** the first disc (40) is in contact by way of its central portion with the support zones (114) while the second disc (60) bears by way of its inside periphery against the cover (8).

19. A clutch according to claim 15 **characterised in that** the first disc (40) is in contact by way of its inside periphery with the support zones (114) while the second disc (60) bears by way of its inside periphery against the cover (8).

20. A clutch according to one of claims 15 to 19 **characterised in that** the end portion (80) of the cover (8) carries an abutment (86) for limiting the inclination of the second Belleville disc (6).

21. A clutch according to one of claims 15 to 20 **characterised in that** the second resilient disc (60) is the external peripheral portion of a diaphragm (206) which is prolonged inwardly by a central portion (207) which is divided into radial fingers by slots.

22. A clutch according to one of claims 15 to 21 **characterised in that** the clutch disengagement device (7) comprises a transverse plate (41) carrying at its outside periphery the force transmission means (5) and connected by way of its inside periphery to an axially slidably mounted sleeve (42).

23. A clutch according to one of claims 15 to 21 **characterised in that** the clutch disengagement device (7) comprises an annular disc (61) carrying in its radially central portion the force transmission means (5) and having at its outside periphery lugs (62) passing through openings (18) provided in a cylindrical peripheral skirt (82) that the cover (8) has, the lugs (62) on the annular disc (61) being adapted to bear against an edge of said openings (18) when the portion adjacent to its inside periphery of the annular disc (61) is displaced axially.

24. A clutch according to one of claims 15 to 21 **characterised in that** the clutch disengagement device (7) comprises a disc (75) comprising an annular portion (72) prolonged towards the axis by a central portion (76) which is divided into radial fingers by slots, the force transmission means (5) being placed at the outside periphery of said annular portion (72) which is itself mounted pivotably at the inside periphery of the end portion (80) of the cover (8).

25. A clutch according to one of claims 1 to 24 **characterised in that** the wear take-up device (90) is actuated by the resilient clutch engagement means (4, 60).

26. A clutch according to one of claims 6 to 25 **characterised in that** the wear take-up device (90) is actuated by the force transmission means (305).

27. A clutch according to one of claims 1 to 26 **characterised in that** the progressivity means (24) are implemented by shaping the support disc (23) of the clutch friction means (2) which carries the friction linings (20, 21).

28. A clutch according to claim 27 **characterised in that** the support disc (23) has a peripheral portion comprising radial blades for example of the tripod type.

29. A clutch according to claim 28 **characterised in that** each blade has a central mounting zone intended for fixing one of the friction linings (20, 21) and two outside peripheral mounting zones intended to co-operate with the other of the friction linings (21, 20).

30. A clutch according to claim 28 **characterised in that** the mounting zones are displaced axially with respect to the central portion of the support disc (23), the central mounting zone being connected to said central portion by a tangential bend while the peripheral mounting zones are connected to said central mounting zone by inclined bends.

31. A clutch according to one of claims 28 to 30 **characterised in that** the progressivity means (24) are so arranged that the incrustation phenomena of the friction linings (20, 21) in the radial blades are minimised.
